**Europäisches Patentamt**

**European Patent Office**

**Office européen des brevets**

(19)

(11) Veröffentlichungsnummer: **0 060 380**
**B1**

(12) **EUROPÄISCHE PATENTSCHRIFT**

(45) Veröffentlichungstag der Patentschrift:
21.12.83

(51) Int. Cl.³: **C 13 L 1/00**

(21) Anmeldenummer: **82100390.2**

(22) Anmeldetag: **21.01.82**

(54) Verfahren zur Gewinnung von Stärke aus Getreide oder Getreidemahlprodukten im Nassverfahren.

(30) Priorität: **18.03.81 DE 3110464**

(43) Veröffentlichungstag der Anmeldung:
**22.09.82 Patentblatt 82/38**

(45) Bekanntmachung des Hinweises auf die Patenterteilung:
**21.12.83 Patentblatt 83/51**

(84) Benannte Vertragsstaaten:
**BE FR GB IT NL**

(56) Entgegenhaltungen.
**DE - B - 1 288 530**
**US - A - 4 171 383**

**STARKE, Band 31, Nr. 3, Marz 1979, Seiten 78-81, M. ROUSHDI et al.: "Factors improving the steeping process of corn grains"**

(73) Patentinhaber: **Westfalia Separator AG,**
**Werner-Habig-Strasse 1 Postfach 3720,**
**D-4740 Oelde 1 (DE)**

(72) Erfinder: **Huster, Heinrich,**
**Friedr.-Wilh.-Weber-Strasse 6, D-4740 Oelde 1 (DE)**
Erfinder: **Meuser, Friedrich, Prof. Dr., Am Eichenhain 52,**
**D-1000 Berlin 28 (DE)**
Erfinder: **Hoepke, Carl-Heinz, Dipl.-Chem. Dr.,**
**Hoffmannstrasse 22, D-4902 Bad Salzuflen (DE)**

(74) Vertreter: **Stracke, Alexander, Dipl.-Ing. et al,**
**Patentanwälte Dipl.-Ing. Loesenbeck Dipl.-Ing. Stracke**
**Jöllenbecker Strasse 164 Postfach 5605,**
**D-4800 Bielefeld 1 (DE)**

## Verfahren zur Gewinnung von Stärke aus Getreide oder Getreidemahlprodukten im Naßverfahren

Die Erfindung bezieht sich auf ein Verfahren zur Gewinnung von Stärke aus Getreide oder Getreidemahlprodukten im Naßverfahren, wobei das Getreide unter Zusatz von Prozeßwasser zunächst einem Quellprozeß unterworfen wird, dem Quellprozeß gegebenenfalls eine Vorzerkleinerung zwecks anschließender Entkeimung des Produktes folgt, das Produkt einer weitgehenden Zerkleinerung mit anschließender Faserabscheidung mittels Sieben unterzogen wird und die Trennung von Stärke und suspendiertem Protein auf zentrifugalem Weg geschieht.

Derartige Verfahren zur Gewinnung von Stärke aus Getreide sind bekannt, insbesondere die Gewinnung von Stärke aus Mais. Die Quellung des Mais erfolgt diskontinuierlich in einer Gegenstromanlage unter Zusatz von $SO_2$ zum Quellwasser, wobei nach etwa 35—50 Stunden Verweilzeit bei einer Temperatur von 45—60°C eine optimale Auflösung der morphologischen Struktur zwischen den Kornelementen sowie den Stärkekörnern und dem Protein erreicht wird, die für die Trennung der Stärkekörner von suspendiertem Protein und die Raffination der Stärke notwendig ist.

Aus dem derart gequollenen Mais lassen sich nach einer Vorzerkleinerung mittels Naßmühlen die fetthaltigen Keime infolge des vorliegenden Dichteunterschiedes abscheiden, bevor durch eine weitere Zerkleinerung des entkeimten Produktes, z. B. durch eine hochtourige Stiftmühle, die Abtrennung von Schalen und Fasern über Siebe sowie die Trennung von Stärkekörnern und suspendiertem Protein über Zentrifugalabscheider vorgenommen wird.

Für den Prozeß der Stärkegewinnung hat sich bisher der genannte sehr komplexe und teils nur empirisch erklärbare Quellvorgang als unerläßlich erwiesen.

Die entscheidenden Nachteile der Stärkegewinnung sind denn auch in der Anwendung des Quellverfahrens zu sehen. Außerdem befinden sich durch die lange Quellzeit stets sehr große Mengen an Rohstoff in der Verarbeitung.

Daraus resultierende Nachteile, wie hohe Investitions- und Instandhaltungskosten für die Quellanlage, hoher Raumbedarf, mangelnde Flexibilität bei plötzlich eintretenden Veränderungen im Betriebsablauf sowie hoher Energie- und Hilfsstoffverbrauch müssen bisher in Kauf genommen werden.

Ferner stellen die nicht zuletzt durch mikrobielle Reaktionen während der Quellung in Lösung gegangenen Substanzen eine Belastung der Stärkeraffination mit Frischwasserzusatz dar. Es entstehen Verluste z. B. an in Lösung gehenden Proteinen und Kohlenhydraten, die nach der Eindickung mittels Verdampfer in die Schalen/Faser-Trocknung abgeführt werden. Außerdem gehen Getreideinhaltsstoffe durch den mikrobiellen Abbau als gasförmige bzw. wasserdampfflüchtige Stoffwechselprodukte verloren.

Die Notwendigkeit der Eindickung des gesamten Quellwassers zur Rückgewinnung gelöster und kolloider Substanzen bringt zudem hohe Kosten für die Verdampfung und die Trocknung mit sich.

Das Kondensat aus der Quellwasser-Verdampfung kann infolge eines hohen Anteils an wasserdampfflüchtigen Substanzen nicht rezirkuliert werden und birgt eine hohe biologische Abwasserbelastung.

Die erforderliche Anwendung von $SO_2$ als Hilfsstoff zur Stabilisierung und Steuerung fermentativer Vorgänge während des langwierigen Quellprozesses stellt bisher erhebliche Anforderungen an den Schutz von Mensch und Material.

Den aufwendigen Quellvorgang kontinuierlich durchzuführen und zu verkürzen und trotzdem die gewünschte Separation der Getreidebestandteile zu ermöglichen, ist bisher fehlgeschlagen.

In der Literaturstelle »Biochemisch-technologische Studien über die Naßverarbeitung von Mais« der Zeitschrift Stärke 21 (1972), S. 68—73, wird zwar auf russische Versuche hingewiesen, das Korn grob zu zerkleinern und dann in horizontalen Diffusoren unter UV-Bestrahlung oder Ultraschallwirkung zu quellen bzw. eine Schälung oder Grobzerkleinerung des Quellgutes vorzunehmen, wodurch eine Verkürzung der Quellzeit erreicht werden soll, jedoch haben Untersuchungen ergeben, daß nach diesem Verfahren die Stärkeausbeute sinkt und die Stärkequalität zurückgeht.

In der DE-B-1 288 530 ist ein Verfahren zur kontinuierlichen Maisquellung bekanntgeworden, in der eine kontinuierliche Quellung von Mais bei einer chemischen Behandlung mit Schwefelsäure vorgeschlagen worden ist. In der Zusatzanmeldung DE-B-1 301 976 wird das Verfahren dahingehend erweitert, daß der gequollene Mais so weit gewaschen wird, bis das ablaufende Waschwasser neutral reagiert. Im Anschluß daran wird das Quellgut in warmem $NaHCO_3$-haltigen Wasser weitergequollen. Die Quellzeit soll bei diesem Verfahren auf 6 h verkürzt werden können, wobei der Quellvorgang in einem horizontal gelagerten Röhrensystem stattfinden soll.

Über die biochemischen und mikrobiellen Vorgänge bei diesem Quellprozeß ist nichts bekannt. Der Anstieg der Trockensubstanz im Quellwasser auf 8 Prozent deutet jedoch auf eine erhebliche Auslaugung der Maiskörner hin.

Das Verfahren wurde im Labormaßstab nachgearbeitet und dabei festgestellt, daß die quantitativen und qualitativen Ausbeutekriterien des konventionellen $SO_2$-Gegenstromverfahrens nicht erreicht werden. Wohl auch aus diesen Gründen hat das Verfahren bisher in der Praxis keinen Eingang gefunden.

Alle bekanntgewordenen Verfahren zur Verringerung des Aufwandes zur Gewinnung von Stärke aus Getreide oder Getreidemahlprodukten konzentrieren sich auf den Quellprozeß, der in jedem Fall einen erheblichen Stoffaustausch zur Folge hat. Neben der Wasseraufnahme sind es stets chemische oder mikrobielle Reaktionen, die die Grundlage für die Trennung der Stärke/Protein-Verbindung bilden. Eine mechanische Einwirkung ist bei den bekannten Verfahren im Anschluß an den Quellvorgang ohne Bedeutung und dient lediglich der Zerkleinerung der Kornstrukturen.

Die Aufgabe der Erfindung besteht darin, das Verfahren zur Gewinnung von Stärke aus Getreide unter Erhalt der Stärkequalität und Trockenmassenausbeuten einfacher und wirtschaftlicher zu gestalten.

Diese Aufgabe wird erfindungsgemäß dadurch gelöst, daß das Rohmaterial einer Kurzzeitquellung ausgesetzt wird, wobei die morphologischen Kornstrukturen weder auf chemischem noch mikrobiologischem Weg aufgelöst werden, das gequollene Rohmaterial in eine mit einem Spaltkopf versehene Hochdruckapparatur unter einem Druck von mindestens 10 bar eingeführt, unter der Einwirkung von hohen Scherkräften zerkleinert und in die Atmosphäre entspannt wird, die notwendige Strukturauflösung zwischen den Stärkekörnern und dem Protein erfolgt.

Da beim erfindungsgemäßen Verfahren nur eine Kurzzeitquellung des Rohmaterials vorgenommen wird und die Strukturauflösung zwischen den Stärkekörnern und dem Protein unter der Wirkung hoher, in der mit einem Spaltkopf versehenen Hochdruckapparatur erzeugter, mechanischer Kräfte erfolgt, wird die Verfahrensdauer wesentlich herabgesetzt.

Auf die langwierige Lockerung der morphologischen Struktur des Kornes durch biochemische und mikrobielle Reaktionen unter Zusatz spezifischer Hilfsstoffe, z. B. $SO_2$, kann bei der Kurzzeitquellung verzichtet werden, da die Voraussetzung für eine mikrobiologisch einwandfreie Beschaffenheit der Produkte während der Fabrikation durch die Tötung vegetativer Organismen als Folge der Hochdruckbehandlung gegeben ist.

Entscheidend für die Erzielung optimaler Ergebnisse der mechanischen Auflösung morphologischer Getreidestrukturen ist die Wahl der Düsengeometrie des Spaltkopfes, die Höhe des Betriebsdruckes und die Rohstoffkonzentration.

Das Protein wird vollständig suspendiert, ebenso wie andere hochpolymere Substanzen, die strukturstabilisierende oder schützende Funktion ausüben und in nativem Zustand unlöslich sind. Kolloide Bestandteile, die sich nicht im Zentrifugalfeld abtrennen lassen, sind nur in Spuren vorhanden. Gelöst werden Salze und niedermolekulare Substanzen, wie sie im nativen Getreide vorliegen. Abbauprodukte hochmolekularer Getreideinhaltsstoffe entstehen nur in geringer Menge, so daß die Belastung des während der folgenden Prozeßschritte mehrfach rezirkulierten Prozeßwassers im Verhältnis zur Prozeßwasserbelastung im konventionellen Verfahren geringer bleibt.

Die bei der Strukturauflösung mittels der Hochdruckapparatur auftretende, sehr intensive Zerkleinerung des Getreidebruches ist ein gewünschter Nebeneffekt, der eine gute Trennung von Fasern und Stärke, insbesondere im glasischen Endosperm, gewährleistet. Eine vergleichbare Zerkleinerung mit herkömmlichen Mahlwerken ist im konventionellen Stärkegewinnungsverfahren nicht gegeben.

Weitere Kennzeichen und Merkmale des erfindungsgemäßen Verfahrens und seiner Weiterbildung und Abwandlung ergeben sich aus den Unteransprüchen und der folgenden Beschreibung von Ausführungsbeispielen. Es zeigt

Fig. 1 eine schematische Darstellung eines Verfahrens zur Gewinnung von Stärke und Nebenprodukten aus Körnermais,

Fig. 2 eine Druckquellanlage für das Verfahren nach Fig. 1 und

Fig. 3 eine grafische Darstellung des Anstiegs der Kornfeuchte während der Kurzzeitquellung unter Druck.

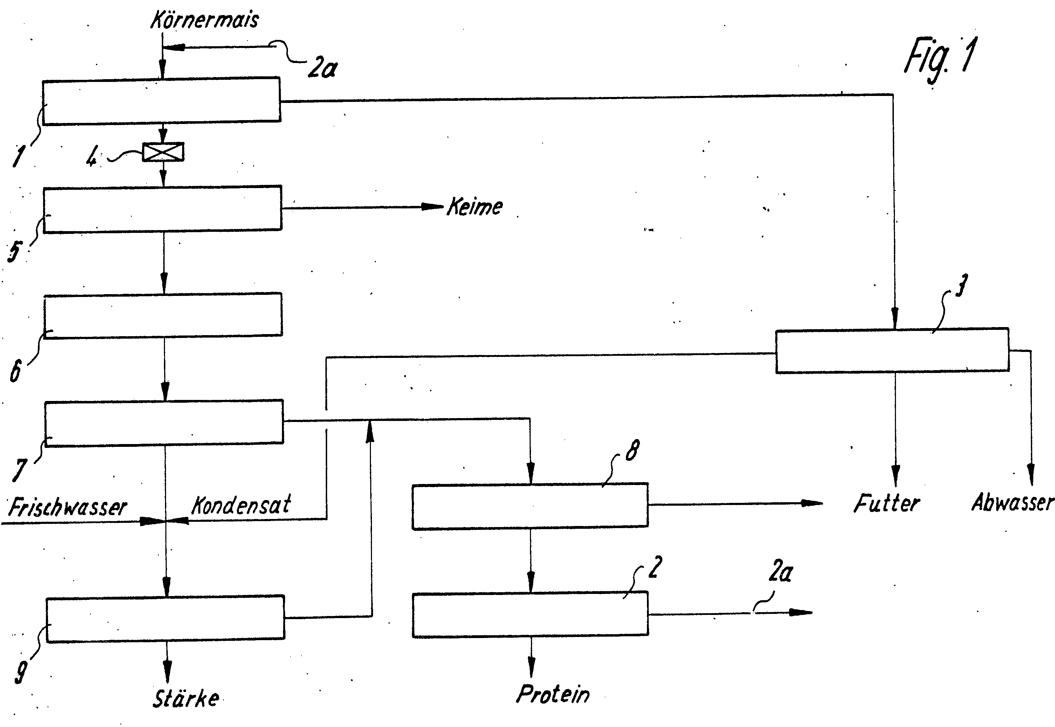

Mit 1 ist in der schematischen Darstellung der Fig. 1 eine beheizbare Druckquellanlage bezeichnet, der vorgereinigter Körnermais nach dosiertem Zusatz der 1,2fachen Masse an Prozeßwasser, z. B. aus dem Proteinkonzentrator 2 über die Leitung 2a kontinuierlich zugeführt wird, wobei die Temperatur in der Quellanlage durch indirekte Beheizung auf 50 bis 60°C eingestellt wird. Nach maximal 3 Stunden unter einem Druck von 10 bis 15 bar, vorzugsweise von 15 bar, ist die notwendige Wasseraufnahme erreicht. Fünfzig Prozent des freien Quellwassers werden abgetrennt und einem Verdampfer 3 zugeführt. Eine Druckreduziervorrichtung 4, die auch als Spaltkopf ausgebildet sein kann, ist am Ausgang der Quellanlage vorgesehen und bewirkt eine Vorzerkleinerung der Maiskörner. Aus dem Maisbruch lassen sich die Keime mittels eines Keimabscheiders 5 abtrennen. In einer nachgeschalteten, mit einem Spaltkopf ausgerüsteten Hochdruckapparatur 6, z. B. des Typs HDP 220 der Firma Paul Hammelmann GmbH & Co. KG, Oelde, erfolgt bei einem Druck von ca. 100 bar die Auflösung der morphologischen Struktur zwischen den Stärkekörnern und der Proteinmatrix bei gleichzeitiger Feinzerkleinerung des Rohmaterials, und zwar ausschließlich unter der Einwirkung von mechanischen Scher- und Spaltkräften auf das gequollene Rohmaterial.

Eine Trennzentrifuge 7 trennt die aus der Hochdruckapparatur 6 anfallende Fraktion von suspendiertem Protein sowie Schalen und Fasern aus der Stärkerohmilch. In einer mehrstufigen Siebstation 8 werden die anfallenden Schalen und Fasern aus der Proteinsuspension abgesiebt.

3

Zusammen mit dem Quellwasserkonzentrat ergibt sich das Maiskleberfutter. Die Proteinsuspension wird in dem Konzentrator 2 weiter eingedickt. Die Raffination der Rohstärkemilch erfolgt unter Zusatz von Quellwasserkondensat und Frischwasser in einer Waschzentrifuge 9.

Anstelle der Druckquellung kann auch eine Quellung unter Atmosphärendruck oder einem geringen Überdruck durchgeführt werden, wobei eine maximale Quellzeit von zwölf Stunden ausreichend ist.

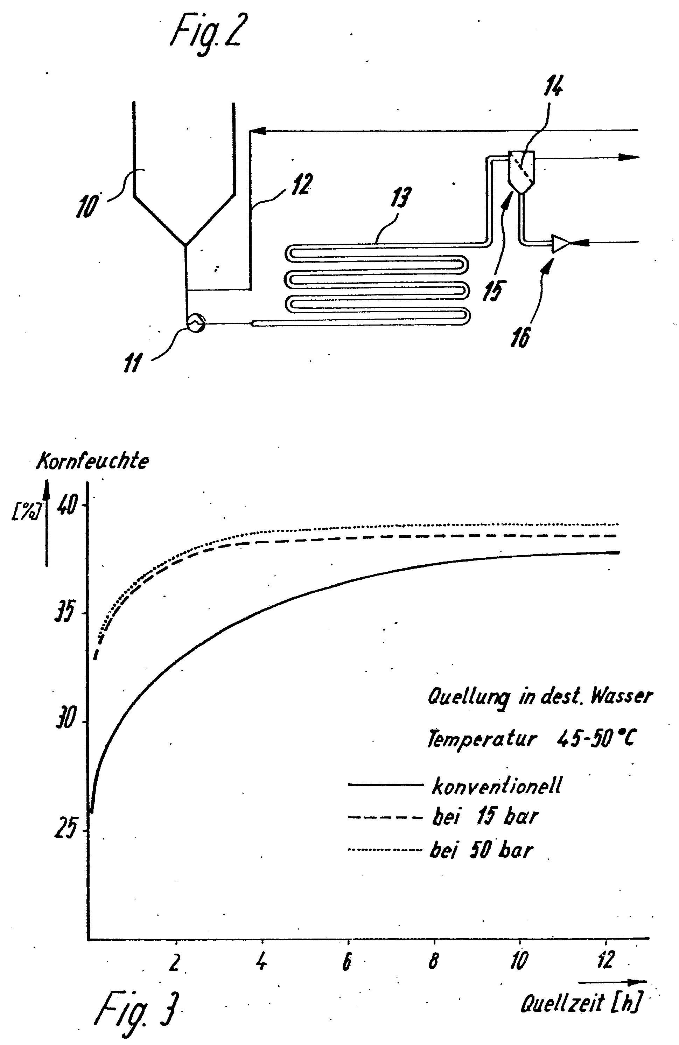

Ein Ausführungsbeispiel für eine Druckquellanlage ist in der Fig. 2 aufgezeigt. Der Körnermais wird aus einem Behälter 10 mittels einer Pumpe 11 abgezogen, nachdem ihm über eine Leitung 12 Prozeßwasser zugeführt wurde. Die Pumpe fördert den Körnermais kontinuierlich in ein als Rohrschlange 13 ausgebildetes Rohrsystem, in dem unter einem Druck von 10 bis 50 bar, vorzugsweise von 15 bar, und einer Temperatur von 50 bis 60°C die Kurzzeitquellung erfolgt. Das Fassungsvermögen der Rohrschlange beträgt zehn bis fünfzehn Prozent der Rohstofftageskapazität der Fabrikationsanlage. Am Ausgang des Rohrsystems ist ein mit einem Sieb 14 ausgerüsteter Behälter 15 vorgesehen. Durch das Sieb wird das Überschußwasser abgezogen. Dem Behälter ist eine Druckreduziervorrichtung 16 nachgeschaltet.

Fig. 3 veranschaulicht den Anstieg der Kornfeuchte während der Quellung unter Druck gegenüber den konventionellen Verfahren. Bereits in weniger als zwei Stunden wird eine Kornfeuchte erzielt, die der maximalen Wasseraufnahme des Getreides nach zwölf Stunden im konventionellen Verfahren entspricht. Optimale Bedingungen für den Betrieb der Druckquellanlage sind bei einem Druck von 10 bis 15 bar und einer Quellzeit von drei Stunden gegeben. Dabei gehen weniger als 0,5 Prozent der Getreidetrockensubstanz in das Quellwasser über.

Folgende Untersuchungsergebnisse wurden mit dem erfindungsgemäßen Verfahren bei der Gewinnung von Stärke aus Körnermais ermittelt:

|  | neues Verfahren | konv. Verfahren |
|---|---|---|
| **Quellprozeß** | | |
| **Quellzeit** | 2 bis 3 h | 30 bis 50 h |
| **Notwendiges Fassungsvermögen der Quellanlage** | 5 bis 6 m³/to Mais | 50 bis 85 m³/to Mais |
| **Mais T. S. im Quellwasser** | 0,3 bis 0,5% | 5 bis 6% |
| Verdampfung | | |
| **Kapazität der Verdampferanlage** | 0,2–0,3 m³/to Mais | 0,8–1,3 m³/to Mais |
| **Belastung des Kondensates (bestimmt als CSB)** | 300–500 mg $O_2$/l | 1000–2000 mg $O_2$/l |

Die zur Rückgewinnung dieser Substanz sowie der im Prozeßwasser gelösten Getreideinhaltsstoffe notwendige Verdampferkapazität und Betriebskosten entsprechen weniger als 25 Prozent des Aufwandes beim konventionellen Verfahren. Ein nur unerheblicher Anteil an wasserdampfflüchtigen Inhaltsstoffen ermöglicht die Rezirkulation des Kondensats.

**Stärkeabscheidung und -Raffination**

|  | neues Verfahren | konv. Verfahren |
|---|---|---|
| Art der Zentrifugierung | vergleichbar | vergleichbar |
| Ausbeute der Stärke | 70–72% TS | 69–71% TS |
| Beschaffenheit des Produktes | vergleichbar | vergleichbar |

Die Stärkeausbeute ist absolut gesehen um mehr als 1% zu steigern.

Der apparative Aufwand für die Raffination der Stärke läßt sich infolge des wesentlich geringeren Gehaltes an gelösten Substanzen in der Stärkemilch wesentlich reduzieren. Der Frischwasserverbrauch kann um ca. 50% verringert werden.

4

| Wasserverbrauch | 0,4—0,8 m³/to Mais | 1,2—1,8 m³/to Mais |
|---|---|---|
| Abwasser | 0,1—0,5 m³/to Mais | 0,8—1,3 m³/to Mais |
| Energieverbrauch | Bedingt durch den erheblich niedriegeren Aufwand beim Quellprozeß und der Quellwasseraufbereitung ist eine deutliche Einsparung, insbesondere an thermischer Energie, gegeben. | |

## Patentansprüche

1. Verfahren zur Gewinnung von Stärke aus Getreide oder Getreidemahlprodukten im Naßverfahren, wobei das Getreide unter Zusatz von Prozeßwasser zunächst einem Quellprozeß unterworfen wird, dem Quellprozeß gegebenenfalls eine Vorzerkleinerung zwecks anschließender Entkeimung folgt, das Produkt einer weitgehenden Zerkleinerung mit anschließender Faserabscheidung mittels Sieben unterzogen wird und die Trennung von Stärke und suspendiertem Protein auf zentrifugalem Weg geschieht, dadurch gekennzeichnet, daß das Rohmaterial einer Kurzzeitquellung ausgesetzt wird, wobei die morphologischen Kornstrukturen weder auf chemischem noch mikrobiologischem Weg aufgelöst werden, das gequollene Rohmaterial in eine mit einem Spaltkopf versehene Hochdruckapparatur (6) unter einem Druck von mindestens 10 bar eingeführt, unter der Einwirkung von hohen Scherkräften zerkleinert und in die Atmosphäre entspannt wird, wobei die notwendige Strukturauflösung zwischen den Stärkekörnern und dem Protein erfolgt.

2. Verfahren nach Anspruch 1, dadurch gekennzeichnet, daß die Kurzzeitquellung ausschließlich zur Wasseraufnahme dient und unter einem Druck von mindestens 5 bar in einem Zeitraum von zwei bis drei Stunden oder unter Atmosphärendruck oder einem geringen Überdruck in einem Zeitraum von maximal zwölf Stunden durchgeführt wird.

3. Verfahren nach Anspruch 2, dadurch gekennzeichnet, daß die unter einem Druck von mindestens 5 bar durchgeführte Kurzzeitquellung kontinuierlich vorgenommen wird.

4. Verfahren nach Anspruch 1 zur Gewinnung von Stärke aus Mais, dadurch gekennzeichnet, daß die Kurzzeitquellung unter einem Druck von 10 bis 50 bar, vorzugsweise unter einem Druck von 15 bar, unter einer Temperatur von 50 bis 60° C und in einer Quellzeit von drei Stunden durchgeführt wird.

5. Verfahren nach einem der vorhergehenden Ansprüche, dadurch gekennzeichnet, daß das unter Druck gequollene Getreide am Ausgang der Quellanlage durch Druckentspannung mittels einer Druckreduziervorrichtung (4; 16) zerkleinert wird, wobei die Druckreduziervorrichtung der Hochdruckapparatur (6) vorgeschaltet ist.

6. Verfahren nach Anspruch 5, dadurch gekennzeichnet, daß die Quellanlage ein Rohrsystem, vorzugsweise eine Rohrschlange (13) aufweist, der das mit Prozeßwasser versetzte Rohmaterial mittels einer Pumpe (11) zugeführt wird, daß am Ausgang des Rohrsystems das Überschußwasser in einem mit einem Sieb (14) ausgerüsteten Behälter (15) abgezogen wird und dem Behälter die Druckreduziervorrichtung (16) nachgeschaltet ist.

## Claims

1. A method of producing starch from grain or milled grain products by a wet process, wherein the grain is first subjected to a swelling process, with the addition of process water, the swelling process is possibly followed by a preliminary disintegration operation, for the purposes of subsequent degermination, the product is subjected to substantial disintegration with subsequent fibre separation by means of sieves, and starch and suspended protein are separated centrifugally, characterised in that the raw material is exposed to short-term swelling, wherein the morphological corn structure is not broken up either chemically or microbiologically, the swelled raw material is introduced into a high pressure apparatus (6) having a splitting head, under a pressure of at least 10 bars, disintegrated under the effect of high shearing forces and released into the atmosphere, the necessary structure break-up occurring between the grains of starch and the protein.

2. A method according to claim 1 characterised in that the short-term swelling operation serves exclusively for absorbing water and is performed under a pressure of at least 5 bars over a period of from 2 to 3 hours or at atmospheric pressure or at a slightly increased pressure over a period of a maximum of 12 hours.

3. A method according to claim 2 characterised in that the short-term swelling operation which is performed under a pressure of at least 5 bars is effected continuously.

4. A method according to claim 1 for producing starch from maize, characterised in that the short-term swelling operation is performed under a pressure of from 10 to 50 bars, preferably a pressure of 15 bars, at a temperature of from 50 to 60° C, and over a swelling period of 3 hours.

5. A method according to one of the preceding claims characterised in that the grain which is swelled under pressure is disintegrated at the discharge of the swelling apparatus by pressure relief by means of a pressure reducing device (4; 16), wherein the pressure reducing device is disposed upstream of the high pressure apparatus (6).

6. A method according to claim 5 characterised in that the swelling apparatus has a pipe system, preferably a pipe coil (13) which is supplied with the raw material with process water mixed therewith, by means of a pump (11), and that the excess water is drawn off at the discharge of the pipe system in a container (15) provided with a sieve (14), and the pressure reducing device (16) is disposed downstream of the container.

## Revendications

1. Procédé d'obtention d'amidon à partir de céréales ou de céréales moulues par voie humide, selon lequel les céréales sont tout d'abord, sous addition d'eau de procédé, soumises à un processus de gonflement qui est éventuellement suivi d'un prébroyage dans le but d'éliminer les germes, le produit étant ensuite soumis à un broyage important avec séparation terminale des fibres par tamisage, la séparation de l'amidon et des protéines en suspension s'effectuant par centrifugation, caractérisé en ce que le matériau brut est soumis à un gonflement de courte durée au cours duquel les structures morphologiques des grains ne sont désagrégées ni par voie chimique ni par voie microbiologique, le matériau brut gonflé est introduit, à une pression d'au moins 10 bars, dans un appareil sous haute pression équipé d'une tête de séparation (6), il est broyé sous l'action de forces de cisaillement élevées, puis détendu à la pression atmosphérique, ce qui a pour résultat la désagrégation de structure nécessaire entre les grains d'amidon et la protéine.

2. Procédé selon la revendication 1, caractérisé en ce que le gonflement de courte durée sert exclusivement à l'absorption de l'eau et est effectué sous une pression d'au moins 5 bars pendant une durée de 2 à 3 heures ou sous pression atmosphérique ou sous une faible surpression pendant une durée maximale de 12 heures.

3. Procédé selon la revendication 2, caractérisé en ce que le gonflement de courte durée est effectué à la continue sous une pression d'au moins 5 bars.

4. Procédé selon la revendication 1, caractérisé en ce que le gonflement de courte durée est effectué sous une pression de 10 à 50 bars et de préférence de 15 bars, à une température de 50 à 60° C et pendant une durée de trois heures.

5. Procédé selon l'une quelconque des revendications précédentes, caractérisé en ce que les céréales gonflées sous pression sont broyées, à la sortie de l'installation de gonflement par détente de la pression au moyen d'un dispositif réducteur de pression (4, 16), le dispositif réducteur de pression étant raccordé à l'appareil sous pression élevée.

6. Procédé selon la revendication 5, caractérisé en ce que l'installation de gonflement est un système à tuyaux, de préférence un serpentin (13) qui reçoit, au moyen d'une pompe (11) le matériau brut mélangé à l'eau de procédé, en ce que, à la sortie du système à tuyaux, l'eau excédentaire est soutirée dans un réservoir (15) équipé d'un tamis (14) et que le dispositif réducteur de pression (16) est raccordé au réservoir.

Fig. 1

Körnermais

2a

1

4

5 → Keime

6

3

7

Frischwasser — Kondensat

8 → Futter    Abwasser

9

Stärke    Protein

2    2a

0 060 380

*Fig. 2*

*Kornfeuchte*

Quellung in dest. Wasser

Temperatur  45-50 °C

——————  konventionell

— — — —  bei  15 bar

·············  bei  50 bar

Quellzeit [h]

*Fig. 3*

9